# EUROPÄISCHE PATENTANMELDUNG

(11) **EP 2 090 716 A1**
(43) Veröffentlichungstag der Anmeldung: **19.08.2009**
(21) Anmeldenummer: 08151533.0
(22) Anmeldetag: 15.02.2008
(51) Int. Cl.: E04F 13/08, E04F 21/18, G01C 15/00

(54) **Messanordnung und Verfahren zum Ausrichten von Halterungen für Verkleidungselemente**

(71) Anmelder: Guido Berger Produktmanagement GmbH, 33378 Rheda-Wiedenbrück (DE)
(72) Erfinder: Berger, Guido, 33378 Rheda-Wiedenbrück (DE)
(74) Vertreter: Bongards, Jochen

(57) **Zusammenfassung**

Die Erfindung betrifft eine Messanordnung zum Ausrichten einer Mehrzahl von Halterungen (5) für Verkleidungselemente. Die Ausrichtung solcher Halterungen ist üblicherweise zeitaufwendig und damit kostenintensiv. Die zum Ausrichten mit der Messanordnung vorgesehenen Halterungen (5) verfügen über ein Stellmittel zum stufenlosen Justieren der Länge der Halterung selber. Die Messanordnung umfasst eine Sendeeinrichtung (1) zum Aussenden eines optischen Signals (3) in einer Ebene im wesentlichen parallel zu einem Untergrund, an dem die Halterungen befestigt sind, und zumindest eine Empfängereinrichtung (6) für das optische Signal (3), wobei die Empfängereinrichtung (6) einen optischen Sensor (6a) umfasst. Die Empfängereinrichtung (6) wird an einer Halterung (5) befestigt und über das Stellmittel der entsprechenden Halterung (5) wird deren Länge derart verstellt, bis über den optischen Sensor (6a) die optimale Ausrichtung der Halterung angezeigt ist. Die Erfindung bestrifft ferner ein Verfahren zum Ausrichten einer Mehrzahl von Halterungen (5) sowie ein Kit zum Ausrichten einer Mehrzahl von Halterungen.

## Beschreibung

Die vorliegende Erfindung betrifft eine Messanordnung sowie ein Verfahren zum Ausrichten einer Mehrzahl von Halterungen für Verkleidungselemente oder für eine Unterkonstruktion für Verkleidungselemente sowie ein entsprechendes Kit.

Gemäß dem Stand der Technik werden Halterungen für Verkleidungselemente oder für eine Unterkonstruktion für Verkleidungselemente an einem Untergrund (z. B. Wand) ausgerichtet, indem zunächst, beispielsweise mit einem Lot, eine Senkrechte bestimmt wird, an der eine Mehrzahl von Halterungen ausgerichtet wird. Für seitliche versetzte Halterungen muss das Lot umgesetzt werden. Ein derartiges Ausrichten einer Mehrzahl von Halterungen ist zeitraubend und fehleranfällig.

Eine Halterung für eine Fassadenkonstruktion ist beispielsweise aus der EP 0 309 778 A1 bekannt, wobei die Halterung gemäß dieser Druckschrift als ein einstückiger Befestigungswinkel ausgebildet ist. Der Befestigungswinkel weist zwei Schenkel mit abgewinkelten Randbereichen auf. Einer der Schenkel wird mit einer Schraube an einer Gebäudewand befestigt, der andere Schenkel weist zur Befestigung von Fassadenelementen zwei Befestigungslöcher sowie eine aus dem Material des Schenkels herausgebogene Klemmfeder auf. Die Klemmfeder dient zur vorläufigen Befestigung des Fassadenelements, welches nach entsprechender Ausrichtung mit dem Schenkel des Befestigungswinkels verschraubt wird.

Zum Befestigen des Fassadenelements wird dieses zunächst in die Klemmfedern mehrerer Befestigungswinkel eingesteckt, wobei die Klemmfedern eine vorläufige Befestigung des Elements bewirken. Da eine Hauswand, auch wenn diese nicht beispielsweise verklinkert ist, niemals vollkommen eben ist, muss das Fassadenelement vor der Anschraubung, der eigentlichen Befestigung, ausgerichtet werden, und zwar indem das Fassadenelement bei entsprechenden Befestigungswinkeln gegenüber der Einsteckstellung weiter in die Klemmfeder geschoben oder aus dieser gezogen wird und so an einer Senkrechten, die beispielsweise mit einem Lot bereitgestellt wird, ausgerichtet wird.

Eine solche Ausrichtung ist langwierig und ungenau, denn die Senkrechte muss für jedes Fassadenelement neu bereitgestellt werden.

Aufgabe der vorliegenden Erfindung ist es daher, eine Messanordnung und ein Verfahren zum Ausrichten einer Mehrzahl von Halterungen für Verkleidungselemente oder für eine Unterkonstruktion für Verkleidungselemente zu schaffen, die beziehungsweise das eine schnelle und genaue Ausrichtung der Halterungen erlaubt.

Diese Aufgabe wird erfindungsgemäß durch eine Messanordnung mit den Merkmalen des Patentanspruchs 1 gelöst.

Jede der auszurichtenden Halterungen ist mit Befestigungsmitteln an einem Untergrund fixiert und weist einen Montagekopf zum Befestigen der Verkleidungselemente beziehungsweise der Unterkonstruktion für Verkleidungselemente auf, wobei der Montagekopf zumindest eine Montagefläche aufweist, an der die Verkleidungselemente oder die Unterkonstruktion für Verkleidungselemente befestigt werden können. Die Halterung umfasst ferner ein Stellmittel zum Justieren des Abstandes der zumindest einen Montagefläche von dem Untergrund in einer Normalenrichtung. Der Begriff der Normalenrichtung wie hier verwendet soll zum Ausdruck bringen, dass diese Richtung im Wesentlichen senkrecht zum (ggf. gemittelten) Untergrund ist, wobei jeweils, bedingt durch Unebenheiten im Untergrund, leichte Abweichungen von der Senkrechten auftreten können.

Die erfindungsgemäße Messanordnung umfasst eine Sendeeinrichtung zum Aussenden eines optischen Signals derart, dass das optische Signal in einer Ebene abgestrahlt wird, wobei diese Ebene quer zur Normalenrichtung orientiert ist. Im Rahmen dieser Erfindung besagt quer, dass die Ebene im Wesentlichen senkrecht zu den Normalenrichtungen der Halterungen ist. Aufgrund von Unebenheiten sind die Normalenrichtungen der Halterungen jedoch nicht alle parallel zueinander, so dass nicht unbedingt alle Normalenrichtungen senkrecht zur Ebene verlaufen.

Für die Funktionsweise der Messanordnung ist es nicht wesentlich, wo die Sendeeinrichtung befestigt ist. Eine solche Befestigung kann an dem Untergrund, an dem die Verkleidungselemente befestigt werden sollen, erfolgen, oder aber, beispielsweise bei einem Fall, bei dem die Verkleidungselemente an einer Wand befestigt werden sollen, bei einem entsprechenden Bodenabschnitt.

Die erfindungsgemäße Messanordnung umfasst ferner eine Empfängereinrichtung für das optische Signal, wobei die zumindest eine Empfängereinrichtung einen optischen Sensor zum Empfangen des optischen Signals und eine Vorrichtung zum Aufsetzen auf den Montagekopf aufweist, wobei die Vorrichtung zum Aufsetzen auf den Montagekopf derart ausgebildet und mit dem Sensor gekoppelt ist, dass der Sensor in der Normalenrichtung einen vorgegebenen axialen Abstand zu der zumindest einen Montagefläche der Halterung aufweist. Auf diese Weise wird gewährleistet, dass der Empfänger stets in einem definierten Abstand zu der Montagefläche angeordnet ist.

Auf das Stellmittel zum Justieren des Abstandes der zumindest einen Montagefläche von dem Untergrund kann, vorzugsweise von vorne, zugegriffen werden.

Die erfindungsgemäße Messanordnung ermöglicht ein schnelles und genaues Ausrichten einer Mehrzahl von Halterungen. Die Sendeeinrichtung sendet ein optisches Signal aus, welches von der zumindest einen Empfängereinrichtung mittels des optischen Sensors empfangen wird. Befindet sich der Sensor und damit auch die Montagefläche nicht bei dem gewünschten Abstand zum Untergrund, wird einfach das Stellmittel justiert, was eine Ortsveränderung des Sensors und damit der Montagefläche bedingt. Sobald eine Halterung ausgerichtet wurde, kann die Empfängereinrichtung von der bereits ausgerichteten Halterung entfernt werden, und über die Vorrichtung zum Aufsetzen auf den Montagekopf an einer neuen, auszurichtenden Halterung befestigt werden.

Im Rahmen der Erfindung ist es auch möglich, eine Mehrzahl von Empfängereinrichtungen zu verwenden und diese erst dann zu entfernen bzw. umzusetzen, wenn sämtliche mit einer Empfängereinrichtung versehenen Halterungen ausgerichtet sind. Dies kann insbesondere dann die Zeit zur Ausrichtung der Halterungen verkürzen, wenn mehrere Personen gleichzeitig an der Ausrichtung der Halterungen arbeiten.

Als Halterungen können beispielsweise solche verwendet werden, wie sie in der EP 07 120 823.5 beschrieben sind.

Bei der erfindungsgemäßen Messanordnung können beliebige Sendeeinrichtungen verwendet werden, so lange diese in der Lage sind, mit einem optischen Signal, welches von einem Sensor empfangen werden kann, eine Ebene aufzuspannen. Das Abstrahlen in einer Ebene kann von der Sendeeinrichtung derart durchgeführt werden, dass permanent eine Ebene aufgespannt wird, oder derart, dass die Sendeeinrichtung zeitlich versetzt in einer Ebene abstrahlt, beispielsweise mit lediglich einem Strahl, der zeitlich versetzt um einen gewissen Winkelbetrag variiert abgestrahlt wird. Bei einer bevorzugten Ausführungsform weist die Sendeeinrichtung einen Laser auf, dessen Strahl in der Ebene abgestrahlt wird. Es können jedoch auch mehrere Laser kombiniert werden, von denen jeder lediglich einen Teil der Ebene aufspannt. Die Verwendung eines Lasers ist bevorzugt, da ein solcher preiswert erhältlich ist und eine Ebene mit einer großen Genauigkeit abstrahlen bzw. aufspannen kann.

Bei der Ausrichtung der Halterungen werden diese in Abhängigkeit von dem Empfang bei dem Sensor ausgerichtet. Dieser Empfang kann rein optisch erfasst werden, und die Halterung wird so lange über das Stellmittel justiert bis rein optisch die gewünschte Ausrichtung der Halterung erreicht ist. Es ist jedoch bevorzugt, dass die Empfängereinrichtung in Abhängigkeit von dem Empfang des optischen Signals anzeigt, in welcher Weise das Stellmittel zum Justieren des Abstands der Montagefläche von dem Untergrund zu betätigen ist. Beispielsweise kann dies durch ein akustisches oder optisches Signal erfolgen. Die Empfängereinrichtung kann beispielsweise anzeigen, dass das Stellmittel für die gewünschte Ausrichtung um eine definierte Anzahl von Längeneinheiten zu justieren ist. Dies kann die Ausrichtung weiter beschleunigen und erhöht deren Genauigkeit.

Die Wahl des Stellmittels sowie der Zugriff auf diese ist für die erfindungsgemäße Messanordnung nicht wesentlich. Ausschlaggebend ist vielmehr, dass das Stellmittel in Abhängigkeit von dem empfangenen Signal derart justiert werden kann, dass eine Justierung des Abstandes der Montagefläche von dem Untergrund möglich ist. Vorzugsweise handelt es sich bei dem Stellmittel jedoch um eine Schraube, auf welche von vorn zugegriffen werden kann. Die Verwendung einer Schraube ermöglicht eine schnelle und unproblematische Justierung ohne das Spezialwerkzeug notwenig ist. Der Zugriff von vorne gewährleistet, dass bei der Ausrichtung der Halterung nicht derart in die Ebene eingegriffen werden muss, das ggf. ein Empfang des optischen Signals bei dem Sensor beeinflusst oder gestört ist.

Wie bereits angedeutet, ist die Anordnung der Sendeeinrichtung für die Funktionsweise der Messanordnung nicht wesentlich, so lange gewisse, oben dargelegte Punkte beachtet werden. Es ist jedoch bevorzugt, dass die Sendeeinrichtung zum Aussenden des optischen Signals lösbar an einem Montagekopf einer Halterung befestigt ist. Eine solche Befestigung ermöglicht eine präzise räumliche Anordnung der Sendeeinrichtung. Über eine entsprechende Justierung der Halterung mit der Sendeeinrichtung ist wiederum eine genaue und rasche Einstellung bzw. Ausrichtung der übrigen Halterungen möglich, da sowohl der Abstand der Sendeeinrichtung bzw. des von dieser ausgestrahlten Signals von dem Montagekopf als auch der Abstand des Sensors zur der Montagefläche konstruktionsbedingt bekannt sind.

Die Aufgabe wird ferner gelöst durch ein Verfahren mit den Merkmalen des Patentanspruchs 7.

Das erfindungsgemäße Verfahren zum Ausrichten einer Mehrzahl von Halterungen für Verkleidungselemente oder für eine Unterkonstruktion für Verkleidungselemente betrifft solche Halterungen, die jeweils einen Befestigungsfuß und einen Montagekopf mit zumindest einer Montagefläche aufweisen und derart ausgebildet sind, dass der in einer Normalenrichtung gemessene Abstand der zumindest einen Montagefläche zu dem Befestigungsfuß mittels eines Stellmittels justierbar ist. Im Rahmen dieser Erfindung besagt die Verwendung des Begriffs Normalenrichtung, dass die Halterung im Wesentlichen senkrecht zu dem Untergrund ausgerichtet wird. Jedoch ist es aufgrund von Unebenheiten im Untergrund nicht immer möglich, eine exakt senkrechte Ausrichtung zum "gemittelten" Untergrund zu erreichen.

Bei dem erfindungsgemäßen Verfahren wird eine Mehrzahl der Halterungen mittels ihrer Befestigungsfüße an einem Untergrund befestigt und eine Sendeeinrichtung zum Aussenden eines optischen Signals derart fixiert, dass das optische Signal in einer zu der Normalenrichtung quer verlaufenden Ebene abgestrahlt werden kann, wobei die Ebene im Wesentlichen parallel zu dem Untergrund verläuft. Die Verwendung des Begriffs quer soll verdeutlichen, dass die Ebene aufgrund von Unebenheiten des Untergrundes nicht unbedingt senkrecht zu den Normalenrichtungen sämtlicher Halterungen verläuft. Die Fixierung der Sendeeinrichtung ist für die Durchführung des Verfahrens nicht wesentlich. Wichtig ist lediglich, dass die Sendeeinrichtung im Laufe der Ausrichtung der Halterungen örtlich nicht verändert wird, oder, falls dies beispielsweise über Nacht doch geschieht, anschließend neu justiert wird.

Zumindest eine Empfängereinrichtung mit einem Sensor zum Erfassen des optischen Signals wird derart auf jeweils einen Montagekopf aufgesetzt, dass der Sensor in der Normalenrichtung einen vorgegebenen Abstand zu der zumindest einen Montagefläche hat. Dieser vorgegebene Abstand ist bei allen Halterungen identisch, so dass eine präzise Ausrichtung der Halterungen möglich ist.

Von der Sendeeinrichtung wird ein optisches Signal in der Ebene abgestrahlt, das von dem Sensor der zumindest einen Empfängereinrichtung empfangen werden soll. Der Abstand der zumindest einen Montagefläche zu dem Untergrund wird dann in Abhängigkeit von dem von dem Sensor empfangenen optischen Signal mittels des Stellmittels justiert.

Das erfindungsgemäße Verfahren gestattet eine schnelle Ausrichtung einer Vielzahl von Halterungen, so dass die Anwendung dieses Verfahrens insbesondere dann sinnvoll ist, wenn viele Halterungen auszurichten sind. Ein weiterer Vorteil des Verfahrens ist es, dass es mit handelsüblichen Geräten ausgeführt werden kann, so dass man nicht auf teure Spezialgeräte angewiesen ist.

Wie bereits angedeutet, ist die Art der Fixierung der Sendeeinrichtung nicht wesentlich. Bei einem bevorzugten Ausführungsbeispiel des erfindungsgemäßen Verfahrens wird die Sendeeinrichtung zum Aussenden eines optischen Signals jedoch fixiert, indem sie lösbar an einem Montagekopf einer Halterung befestigt wird. Eine solche Fixierung hat zum Vorteil, dass der Abstand der von der Sendeeinrichtung erzeugten Ebene zu dem Montagekopf bekannt ist, und somit die eigentliche Ausrichtung der Halterungen über die Sensoreinrichtung schnell und präzise ausgeführt werden kann.

Die vorliegende Erfindung betrifft ferner ein Kit zum Ausrichten einer Mehrzahl von Halterungen für Verkleidungselemente oder für eine Unterkonstruktion für Verkleidungselemente. Das Kit umfasst eine Mehrzahl von Halterungen, wobei jede Halterung mit Befestigungsmitteln an einem Untergrund befestigt werden kann und jeweils einen Montagekopf zum Befestigen der Verkleidungselemente bzw. der Unterkonstruktion für Verkleidungselemente aufweist, wobei der Montagekopf zumindest eine Montagefläche aufweist, an der die Verkleidungselemente oder die Unterkonstruktion für Verkleidungselemente befestigt werden können, und wobei die Halterung ein Stellmittel zum Justieren des Abstands der zumindest einen Montagefläche von dem Untergrund in einer Normalenrichtung umfasst. Das Kit umfasst ferner eine Sendeeinrichtung zum Aussenden eines optischen Signals derart, dass das optische Signal in einer Ebene quer zu der Normalenrichtung abgestrahlt wird, und zumindest eine Empfängereinrichtung für das optische Signal, wobei die zumindest eine Empfängereinrichtung einen optischen Sensor zum Empfangen des optischen Signals und eine Vorrichtung zum Aufsetzen auf den Montagekopf aufweist, wobei die Vorrichtung zum Aufsetzen auf den Montagekopf derart ausgebildet und mit dem Sensor gekoppelt ist, dass der Sensor in der Normalenrichtung einen vorgegebenen Abstand zu der zumindest einen Montagefläche der Halterung aufweist, und dass auf das Stellmittel zum Justieren des Abstands der zumindest einen Montagefläche von dem Untergrund zugegriffen werden kann.

Weitere vorteilhafte Ausgestaltungen des erfindungsgemäßen Kits sind in den Unteransprüchen angegeben.

Ein bevorzugtes Ausführungsbeispiel der erfindungsgemäßen Messanordnung sowie des erfindungsgemäßen Verfahrens werden nachfolgend unter Bezugnahme auf die Zeichnung beschrieben, in der

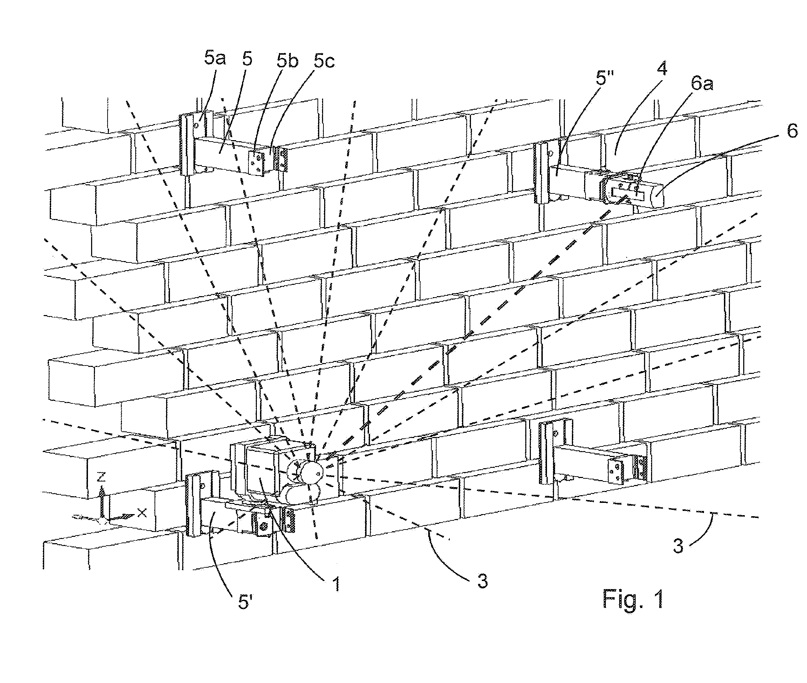

Figur 1 ein Ausführungsbeispiel einer Messanordnung zum Ausrichten einer Mehrzahl von Halterungen für Verkleidungselemente oder für eine Unterkonstruktion für Verkleidungselemente veranschaulicht.

Das in Figur 1 veranschaulichte Ausführungsbeispiel einer erfindungsgemäßen Messanordnung umfasst eine Sendeeinrichtung (1) zum Aussenden eines optischen Signals. Das optische Signal wird in einer durch mehrere gestrichelte Linien (3) angedeutete Ebene abgestrahlt. Bei der Sendeeinrichtung (1) handelt es sich bei dem gezeigten Ausführungsbeispiel um eine Lasereinrichtung, die einen die Ebene aufspannenden (nicht im Detail gezeigten) Laser umfasst. Die Sendeeinrichtung ist mit einer entsprechenden Vorrichtung lösbar an dem Montagekopf der entsprechenden Halterung befestigt.

An einem Untergrund, der im gezeigten Ausführungsbeispiel durch eine Wand (4) verwirklicht ist, sind eine Mehrzahl von Halterungen (5) befestigt, wobei jede der Halterungen (5) mit einem Befestigungsmittel bzw. einem Befestigungsfuß (5a) an der Wand (4) fixiert ist. Jede der Halterungen (5) umfasst einen Montagekopf (5b) zum Befestigen der Verkleidungselemente bzw. der Unterkonstruktion für Verkleidungselemente. Jeder der Montageköpfe weist zumindest eine Montagefläche (5c) auf, an der die Verkleidungselemente oder die Unterkonstruktion für Verkleidungselemente befestigt werden können. Jede Halterung (5) umfasst ferner ein (nicht dargestelltes) Stellmittel zum Justieren des Abstands der Montageflächen (5c) und damit der Montageköpfe (5b) von der Wand (4), wobei jedes Stellmittel derart ausgebildet ist, dass es den Abstand der Montagefläche (5c) zur Wand (4) in einer Normalenrichtung justiert. Die Normalenrichtung ist bei perfekt ebenem Untergrund eine Richtung senkrecht zum Untergrund. Da jedoch in der Regel ein Untergrund, an dem die Halterungen befestigt sind, nicht perfekt eben ist, ist die Orientierung der Halterungen zu dem Untergrund lediglich im Wesentlichen senkrecht.

Die von der Sendeeinrichtung (1) aufgespannte Ebene verläuft quer zur Normalenrichtung der Halterungen (5). Quer deshalb, weil aufgrund von nicht zu vermeidenden Unebenheiten des Untergrunds nicht gewährleistet sein kann, dass die Ebene senkrecht zu sämtlichen Normalenrichtungen der Halterungen (5) verlaufen kann - eine solche Ebene kann lediglich im Wesentlichen senkrecht zu den Normalenrichtungen verlaufen bzw. orientiert sein.

Die Messanordnung umfasst bei dem gezeigten Ausführungsbeispiel ferner eine Empfängereinrichtung (6) für das optische Signal der Lasereinrichtung (1). Die Empfängereinrichtung (6) umfasst einen optischen Sensor (6a) zum Empfangen des optischen Signals und eine Vorrichtung zum Aufsetzen auf den Montagekopf (6b). Die Vorrichtung zum Aufsetzen auf den Montagekopf (6b) ist derart ausgebildet und mit dem Sensor (6a) gekoppelt, dass der Sensor (6a) in der Normalenrichtung der entsprechenden Halterung einen vorgegebenen Abstand zu der zumindest einen Montagefläche (5c) der Halterung (5) aufweist. Die Empfängereinrichtung (6) ist ferner derart an der entsprechenden Halterung befestigt, dass auf das Stellmittel zum Justieren des Abstands der zumindest einen Montagefläche von dem Untergrund zugegriffen werden kann. Bei dem gezeigten Ausführungsbeispiel kann von vorn auf das Stellmittel zugegriffen werden. Dies wird durch eine spezielle Ausgestaltung der Halterung erreicht. Damit von vorn auf das Stellmittel zugegriffen werden kann, weist die Montagefläche eine (nicht gezeigte) Öffnung auf, durch die der Zugriff auf das Stellmittel, mit dem der Abstand des Montagekopfes bzw. der Montagefläche von dem Untergrund justiert wird, erfolgt. Damit die Empfängereinrichtung (6) einen solchen Zugriff auf das Stellmittel nicht behindert, ist sie im Bereich der Montagefläche (5c) dezentral zu dieser ausgebildet.

Da die Abmessung der Vorrichtung, mit der die Sendeeinrichtung (1) an der entsprechenden Halterung befestigt ist, und ebenfalls die der Empfängereinrichtung (6), und damit die exakte Position des Sensors (6a) bekannt ist, kann bei einer derartigen Anordnung eine schnelle, genaue und zuverlässige Ausrichtung der Halterungen erfolgen. Wie dies im Einzelnen vorgenommen werden kann, wird im Folgenden dargelegt.

Bei dem aus Figur 1 ersichtlichen Ausführungsbeispiel des erfindungsgemäßen Verfahrens zum Ausrichten einer Mehrzahl von Halterungen für Verkleidungselemente oder für eine Unterkonstruktion für Verkleidungselemente werden zunächst eine Mehrzahl von Halterungen (5) über ihre Befestigungsfüße bzw. -mittel (5a) an der Wand (4) montiert. Wie diese Befestigung im Einzelnen vorgenommen wird, ist für das Verfahren selber unwesentlich.

Aufgrund der nicht vollständig ebenen Wand (4) sind die Halterungen (5) lediglich im Wesentlichen parallel zueinander. Die Halterungen (5) weisen ferner einen Montagekopf (5b) mit zumindest einer Montagefläche (5c) auf, wobei der Abstand der Montagefläche (5c) zu dem Befestigungsfuß bzw. -mittel (5a) in "Normalenrichtung" (siehe oben) mittels eines Stellmittels justierbar ist. Bei dem Stellmittel handelt es sich um eine Schraube, auf die bei dem gezeigten Ausführungsbeispiel von vorn zugegriffen werden kann.

Auf einer der Halterungen (5') wird dann die Lasereinrichtung (1) fixiert. Die Lasereinrichtung wird dabei so justiert, dass das von ihr abgestrahlte Laserlicht in einer Ebene verläuft, die "quer" (siehe oben) zu den Normalenrichtungen der Halterungen und im Wesentlichen parallel zu der Wand verläuft. Wie parallel diese Ebene zu dem Untergrund verläuft hängt jeweils von der Beschaffenheit dieses Untergrundes ab.

Auf einer anderen der Halterungen (5") wird dann eine Empfängereinrichtung (6) mit dem Sensor (6a) für das Lasersignal befestigt. Die Empfängereinrichtung wird dabei so an dem Montagekopf (5b) befestigt, dass der Sensor (6a) in der Normalenrichtung einen vorgegebenen Abstand zu der Montagefläche (5c) aufweist.

Ob Empfänger- oder Sendeeinrichtung zuerst befestigt werden ist für das Verfahren unerheblich.

Die die Lasereinrichtung (1) tragende Halterung (5') wird dann über das Stellmittel derart eingestellt, dass die von der Lasereinrichtung (1) aufgespannte Ebene einen vorgegebenen Abstand zu der Wand aufweist. Da die Dimensionen der Lasereinrichtung (1) bekannt ist, kann dies einfach durch Verstellen des Stellmittels der entsprechenden Halterung erfolgen. Um dieses Verstellen möglichst einfach zu gestalten, ist die Lasereinrichtung (1) dezentral an der Halterung befestigt, so dass die Montagefläche, über welche auf das Stellmittel zugegriffen werden kann, von vorn zugänglich ist.

Sobald die Lasereinrichtung (1) positioniert ist, wird von dieser ein optisches Signal in der Ebene abgestrahlt. Das Signal trifft auf den Sensor (6a) der Empfängereinrichtung (6) und der Abstand der Montagefläche (5c) zu dem Untergrund, und damit natürlich der Abstand des Sensors (6a) zu dem Untergrund, wird in Abhängigkeit von dem beim Sensor empfangenen Signal mittels des Stellmittels justiert, bis dieser Abstand genau dem vorgegebenen Abstand entspricht.

Sobald die Halterung mit der Empfängereinrichtung (6) ausgerichtet ist, wird die Empfängereinrichtung (6) von der entsprechenden Halterung entfernt und auf eine andere auszurichtende Halterung aufgesetzt.

## Patentansprüche

1. Messanordnung zum Ausrichten einer Mehrzahl von Halterungen (5) für Verkleidungselemente oder für eine Unterkonstruktion für Verkleidungselemente,
wobei jede Halterung (5) mit Befestigungsmitteln an einem Untergrund (4) fixiert ist und jeweils einen Montagekopf (5b) zum Befestigen der Verkleidungselemente bzw. der Unterkonstruktion für Verkleidungselemente aufweist, wobei der Montagekopf (5b) zumindest eine Montagefläche (5c) aufweist, an der die Verkleidungselemente oder die Unterkonstruktion für Verkleidungselemente befestigt werden können, und wobei die Halterung (5) ein Stellmittel zum Justieren des Abstands der zumindest einen Montagefläche (5c) von dem Untergrund (4) in einer Normalenrichtung umfasst, wobei die Messanordnung aufweist:
eine Sendeeinrichtung (1) zum Aussenden eines optischen Signals (3) derart, dass das optische Signal (3) in einer Ebene abgestrahlt wird, wobei die Ebene quer zur Normalenrichtung orientiert ist,
zumindest eine Empfängereinrichtung (6) für das optische Signal (3), wobei die zumindest eine Empfängereinrichtung (6) einen optischen Sensor (6a) zum Empfangen des optischen Signals (3) und eine Vorrichtung zum Aufsetzen auf den Montagekopf (5b) aufweist, wobei die Vorrichtung zum Aufsetzen auf den Montagekopf (5b) derart ausgebildet und mit dem Sensor (6a) gekoppelt ist, dass der Sensor (6a) in der Normalenrichtung einen vorgegebenen Abstand zu der zumindest einen Montagefläche (5c) der Halterung (5) aufweist, und dass auf das Stellmittel zum Justieren des Abstands der zumindest einen Montagefläche (5c) von dem Untergrund (4) zugegriffen werden kann.

2. Messanordnung nach Anspruch 1, **dadurch gekennzeichnet, dass** die Sendeeinrichtung (1) einen Laser aufweist, dessen Strahl in der Ebene abgestrahlt wird.

3. Messanordnung nach einem der Ansprüche 1 oder 2, **dadurch gekennzeichnet, dass** die Empfängereinrichtung (6) in Abhängigkeit von dem Empfang des optischen Signals (3) anzeigt, in welcher Weise das Stellmittel zum Justieren des Abstands der Montagefläche (5c) von dem Untergrund (4) zu betätigen ist.

4. Messanordnung nach einem der Ansprüche 1 bis 3, **dadurch gekennzeichnet, dass** das Stellmittel eine Schraube ist, auf welche von vorn zugegriffen werden kann.

5. Messanordnung nach einem der Ansprüche 1 bis 4, **dadurch gekennzeichnet, dass** die Empfängereinrichtung (6) lösbar an jeweils einem Montagekopf (5b) der Halterungen (5) befestigt werden kann.

6. Messanordnung nach einem der Ansprüche 1 bis 5, **dadurch gekennzeichnet, dass** die Sendeeinrichtung (1) zum Aussenden des optischen Signals (3) lösbar an einem Montagekopf (5b) einer Halterung (5) befestigt ist.

7. Verfahren zum Ausrichten einer Mehrzahl von Halterungen (5) für Verkleidungselemente oder für eine Unterkonstruktion für Verkleidungselemente, wobei die Halterungen (5) jeweils einen Befestigungsfuß und einen Montagekopf (5b) mit zumindest einer Montagefläche (5c) aufweisen und derart ausgebildet sind, dass der in einer Normalenrichtung gemessene Abstand der zumindest einen Montagefläche (5c) zu dem Befestigungsfuß mittels eines Stellmittels justierbar ist, wobei:
eine Mehrzahl der Halterungen (5) mittels ihrer Befestigungsfüße an einem Untergrund (4) befestigt wird,
eine Sendeeinrichtung (1) zum Aussenden eines optischen Signals (3) derart fixiert wird, dass das optische Signal (3) in einer zu der Normalenrichtung quer verlaufenden Ebene abgestrahlt werden kann, wobei die Ebene im Wesentlichen parallel zu dem Untergrund (4) verläuft,
zumindest eine Empfängereinrichtung (6) mit einem Sensor (6a) zum Erfassen des optischen Signals (3) derart auf jeweils einen Montagekopf (5b) aufgesetzt wird, dass der Sensor (6a) in der Normalenrichtung einen vorgegebenen Abstand zu der zumindest einen Montagefläche (5c) hat,
von der Sendeeinrichtung (1) ein optisches Signal (3) in der Ebene abgestrahlt wird, das von dem Sensor (6a) der zumindest einen Empfängereinrichtung (6) empfangen werden soll, und
der Abstand der zumindest einen Montagefläche (5c) zu dem Untergrund (4) in Abhängigkeit von dem von dem Sensor (6a) empfangenen optischen Signal (3) mittels des Stellmittels justiert wird.

8. Verfahren nach Anspruch 7, **dadurch gekennzeichnet, dass** die Sendeeinrichtung (1) zum Aussenden eines optischen Signals (3) fixiert wird, indem sie lösbar an einem Montagekopf (5b) einer Halterung (5) befestigt wird.

9. Ein Kit zum Ausrichten einer Mehrzahl von Halterungen (5) für Verkleidungselemente oder für eine Unterkonstruktion für Verkleidungselemente, umfassend:
eine Mehrzahl von Halterungen (5), wobei jede Halterung (5) mit Befestigungsmitteln an einem Untergrund (4) befestigt werden kann und jeweils einen Montagekopf (5b) zum Befestigen der Verkleidungselemente bzw. der Unterkonstruktion für Verkleidungselemente aufweist, wobei der Montagekopf (5b) zumindest eine Montagefläche (5c) aufweist, an der die Verkleidungselemente oder die Unterkonstruktion für Verkleidungselemente befestigt werden können, und wobei die Halterung (5) ein Stellmittel zum Justieren des Abstands der zumindest einen Montagefläche (5c) von dem Untergrund (4) in einer Normalenrichtung umfasst,
eine Sendeeinrichtung (1) zum Aussenden eines optischen Signals (3) derart, dass das optische Signal (3) in einer Ebene quer zu der Normalenrichtung abgestrahlt wird,
zumindest eine Empfängereinrichtung (6) für das optische Signal (3), wobei die zumindest eine Empfängereinrichtung (6) einen optischen Sensor (6a) zum Empfangen des optischen Signals (3) und eine Vorrichtung zum Aufsetzen auf den Montagekopf (5b) aufweist, wobei die Vorrichtung zum Aufsetzen auf den Montagekopf (5b) derart ausgebildet und mit dem Sensor (6a) gekoppelt ist, dass der Sensor (6a) in der Normalenrichtung einen vorgegebenen Abstand zu der zumindest einen Montagefläche (5c) der Halterung (5) aufweist, und dass auf das Stellmittel zum Justieren des Abstands der zumindest einen Montagefläche (5c) von dem Untergrund (4) zugegriffen werden kann.

10. Das Kit nach Anspruch 9, **dadurch gekennzeichnet, dass** die Sendeeinrichtung (1) einen Laser aufweist, dessen Strahl in der Ebene abgestrahlt wird.

11. Das Kit nach einem der Ansprüche 9 oder 10, **dadurch gekennzeichnet, dass** die Empfängereinrichtung (6) ein Mittel aufweist, dass in Abhängigkeit von dem Empfang des optischen Signals (3) anzeigt, in welcher Weise das Stellmittel zum Justieren des Abstands der Montagefläche (5c) von dem Untergrund (4) zu betätigen ist.

12. Das Kit nach einem der Ansprüche 9 bis 11, **dadurch gekennzeichnet, dass** das Stellmittel eine Schraube ist, auf welche von vorn zugegriffen werden kann.

13. Das Kit nach einem der Ansprüche 9 bis 12, **dadurch gekennzeichnet, dass** die Empfängereinrichtung (6) lösbar an dem Montagekopf (5b) der Halterungen (5) befestigt werden kann.

14. Das Kit nach einem der Ansprüche 9 bis 13, **dadurch gekennzeichnet, dass** die Sendeeinrichtung (1) zum Aussenden des optischen Signals (3) lösbar an dem Montagekopf (5b) einer Halterung (5) befestigt ist.
